# EUROPEAN PATENT SPECIFICATION

(11) **EP 3 663 479 B1**
(45) Date of publication and mention of the grant of the patent: **30.04.2025**
(21) Application number: 18210182.4
(22) Date of filing: 04.12.2018
(51) Int. Cl.: E04D 13/10, H02S 20/23, F24S 25/61

(54) **FASTENER FOR ROOF SAFETY PRODUCTS**
BEFESTIGUNGSELEMENT FÜR DACHSICHERHEITSPRODUKTE
ATTACHE POUR PRODUITS DE SÉCURITÉ DE TOIT

(43) Date of publication of application: 10.06.2020
(73) Proprietor: Rautaruukki Oyj, 00620 Helsinki (FI)
(72) Inventor: HUOPANA, Tuomo, 00620 Helsinki (FI)
(74) Representative: Papula Oy

(56) References cited:
- WO-A1-2006/123979
- CA-A1- 2 120 688
- CH-A- 154 738
- DE-A1- 19 849 232
- DE-A1- 4 009 164
- DE-U1- 20 010 290
- DE-U1- 202005 000 694
- JP-A- S61 105 057
- US-A1- 2005 102 958
- US-B1- 8 984 819

## Description

### FIELD

The present invention relates to a fastener for roof safety products.

Further, the present invention relates to a method for manufacturing a fastener for roof safety products.

### BACKGROUND

Various fasteners, brackets, clamps, etc. by means of which roof safety products, for example snow guards, can be coupled to a roof are known. Snow guards are well established as a necessary accessory for roofs in northern climates. Such devices should be easy to install, anchor reliably, and be capable of retaining a substantial mass of snow. The design of such devices should address maximum, extreme conditions. Typical designs for snow guards or snow barriers have employed tubing fitted through roof-mounted fasteners. Such fasteners have been individually mounted to the roof surface. Various fasteners are designed to be attached to a seam of a seam roof and various other fasteners are designed to be directly attached to a planar roof surface. Some known fasteners are configured to be attached to an upper roof surface having at least one step in the upper roof surface.

For example, a fastener is known which has a planar support configured to be attached to an upper roof surface via a bottom fixture and a stack of sealants. A plate is arranged perpendicular to the planar support. Other elements, for example snow guard rods or tubes, can be coupled to the plate. The plate serves as a base or support for the roof safety product. The plate may be, for example, therefore called a base member. The plate and the planar support are typically made of one piece of metal. In case that the roof surface has a step, a bottom fixture having a specific height is arranged between the planar surface and the upper roof surface at one side of the step. The planar surface is directly arranged on the roof surface at the other side of the step. The height of the bottom fixture is depending on the height of the step. The height of the bottom fixture is typically identical with the height of the step of the roof surface. The bottom fixture has to be replaced in order to attach the fastener to a roof having a step with a different step height in the upper roof surface.

Further, document US 6453623 B1 discloses a snow barrier for a roof having brackets mounted on pads. The bracket sits on two pads that spread the load on the roof. The pads serve as bracket support means. The pads are optional, as the brackets may be fastened directly to the roof. The larger, down slope pad, if employed, need not necessarily be fastened to the roof. Bolts or threaded screws through the upper pad attach that pad to the roof. A gap is formed between the bracket, the pads and the upper roof surface. However, document US 6453623 B1 does not describe mounting of a bracket to a roof having at least one step in the upper roof surface. Another fastener is known from CH 154 738 A.

In view of the foregoing it would be beneficial to provide a fastener for roof safety products, wherein the fastener can be directly mounted to roofs having steps with different heights of the steps in order to reduce the amount of needed fastener versions.

### SUMMARY OF THE INVENTION

The invention is defined by the features of the independent claims. Some specific embodiments are defined in the dependent claims.

According to a first aspect of the present invention, there is provided a fastener for roof safety products according to claim 1

Various embodiments of the first aspect may comprise at least one feature from the following bulleted list:
- the base member, the first leg comprising first foot and the second leg comprising the second foot are formed of one single piece
- the base member, the first leg comprising the first foot and the second leg comprising the second foot are made of metal
- the legs are arranged at opposing ends of the base member
- the fastener is capable of being attached to an upper roof surface having steps with different step heights
- a length difference (distance) between the first leg and the second leg is in the range between 10 mm and 80 mm, preferably in the range between 20 mm and 50 mm, for example 30 mm
- the coupling section comprises at least one opening through the base member
- the coupling section is capable of receiving two tubes having a circular or oval cross-section through the at least one opening
- the base portion is a lower edge or a lower surface of the base member below the coupling section and between the legs, thus forming an upper boundary of a gap or space between an upper roof surface and the fastener
- the fastener is made of a steel plate having a thickness in the range between 1 mm and 5 mm, preferably between 2 mm and 3 mm, for example 2.5 mm
- each foot comprises a contacting surface configured to be coupled to the upper roof surface
- the contacting surfaces of the feet are arranged parallel to each other
- the contacting surfaces of the feet are not arranged parallel to each other
- the surface area of the contact surface of the first foot is less than the surface area of the contact surface of the second foot
- a contacting surface of at least one of the feet may be adapted for use with a particular form of the upper roof surface
- the fastener is configured to be coupled to a snow guard or roof safety equipment
- the base portion is a lower edge or lower surface of the base member
- the base portion is located at a different level than the first foot and at a different level than the second foot
- the roof safety product is a snow guard, at least a part of a platform or walkway, or at least a part of a ladder

According to a second aspect of the present invention, there is provided a method for manufacturing a fastener for roof safety products according to claim 14.

Various embodiments of the second aspect may comprise at least one feature from the following bulleted list:
- cutting a planar metal substrate in order to obtain the single piece having the predefined shape
- providing openings or borings within the outer contour of the cut piece of metal
- punching a planar metal substrate in order to obtain the single piece having the predefined shape
- providing openings or borings within the outer contour of the punched piece of metal
- covering the fastener completely or partially with paint

Considerable advantages are obtained by certain embodiments of the invention. A fastener for roof safety products and a method for manufacturing a fastener for roof safety products are provided. The fastener can be directly mounted to roofs having steps with different heights of the steps. Thus, it is not necessary to produce a wide variety of fasteners for different step heights anymore. The same fastener can be used in connection with different steps heights. No separate bottom fixtures or pads are required for mounting.

The invention further provides a rigid structure, which is less problematic from the sealing point of view and has less parts, wherein the fastener can also be mounted to roofs having steps with different heights of the steps. The amount of needed fastener versions can be reduced as one fastener can cover many roof shapes. The fastener according to the present invention is easy to manufacture and easy to install. The fastener according to the present invention enables installation to various roof types with different step heights. The gap further enables moisture to evaporate and dirt to escape from under the fastener, because there is space for air to flow through the gap. The fastener is strong enough for installation of roof safety products and at the same time lighter in weight.

### BRIEF DESCRIPTION OF THE DRAWINGS

For a more complete understanding of particular embodiments of the present invention and their advantages, reference is now made to the following descriptions, taken in conjunction with the accompanying drawings. In the drawings:
FIGURE 1 illustrates a commercially available fastener for roof safety products,
FIGURE 2 illustrates another commercially available fastener for roof safety products,
FIGURE 3 illustrates a schematic side view of a fastener in accordance with at least some embodiments of the present invention,
FIGURE 4 illustrates a schematic perspective view of a further fastener in accordance with at least some embodiments of the present invention,
FIGURE 5 illustrates a schematic side view of an even further fastener in accordance with at least some embodiments of the present invention, and
FIGURE 6 illustrates a schematic top view of a yet further fastener in accordance with at least some embodiments of the present invention.

### EMBODIMENTS

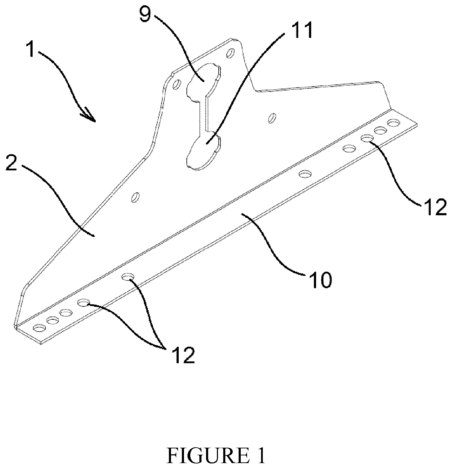

In FIGURE 1 a commercially available fastener 1 for roof safety products is illustrated. The fastener 1 has a planar support 10 configured to be attached to an upper roof surface (not shown). The planar support 10 comprises a plurality of borings 12. Thus, the fastener 1 can be directly attached to the upper roof surface, for example using screws or bolts. A plate or base member 2 is arranged substantially perpendicular to the planar support 10. The base member 2 comprises a coupling area 9 or coupling section with a plurality of openings 11 through the base member 2. Other elements (not shown), for example roof safety products such as snow guard rods or tubes, can be coupled to the base member 2. The base member 2 serves as a base or support for the roof safety products. The base member 2 and the planar support 10 are made of one piece of metal.

In case that the roof surface has a step, an additional bottom fixture (not shown) and a stack of sealants (not shown) is used for attachment. The separate bottom fixture is arranged between the planar support 10 and an upper roof surface at one side of the step. The planar support 10 is positioned directly on the upper roof surface at the other side of the step. The height of the bottom fixture is depending on the height of the step of the upper roof surface. The height of the bottom fixture is typically identical with the height of the step of the upper roof surface.

The bottom fixture has to be replaced in order to attach the fastener to a roof having a step with a different step height. In other words, another bottom fixture has to be used for another step height.

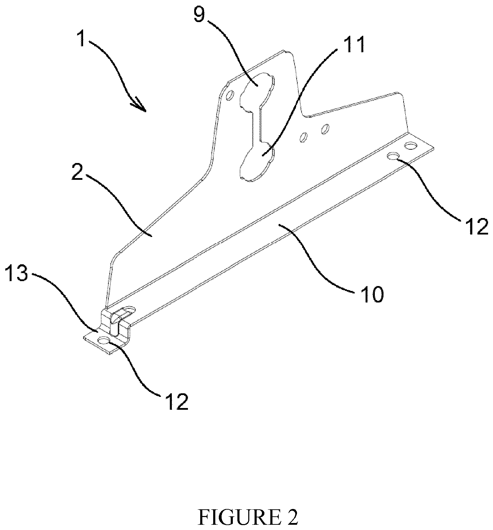

In FIGURE 2 another commercially available fastener 1 for roof safety products is illustrated. The fastener 1 has a planar support 10 configured to be attached to an upper roof surface (not shown) having a step (not shown). The shown fastener 1 is designed for one particular step height of the upper roof surface only. An extension 13 is arranged at one end of the planar support 10. The extension 13 is arranged at another level than the planar support 10. The planar support 10 and the extension each comprise at least one borings 1. Thus, the fastener 1 can be directly attached to the upper roof surface having the step, for example using screws or bolts. A plate or base member 2 is arranged substantially perpendicular to the planar support 10. The base member 2 comprises a coupling area 9 with a plurality of openings 11 through the base member 2. Other elements (not shown), for example roof safety products such as snow guard rods, can be coupled to the base member 2. The base member 2 serves as a base or support for the roof safety products. The base member 2 and the planar support 10 are made of one piece of metal.

The entire fastener 1 has to be replaced in case of a roof having a step with a different step height. The shown fastener 1 can only be used for a step height which is identical with the distance between the planar support 10 and the extension 13.

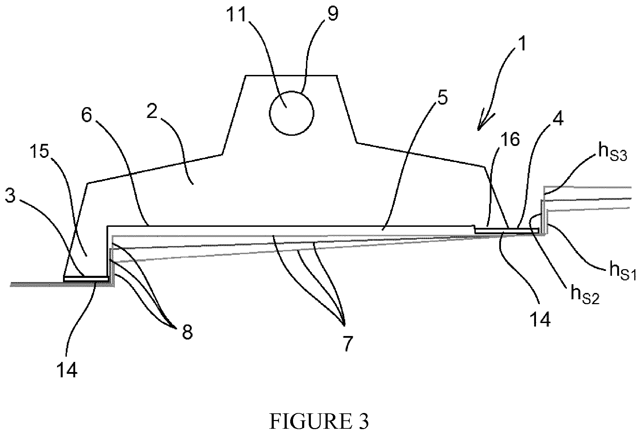

In FIGURE 3 a schematic side view of a fastener 1 in accordance with at least some embodiments of the present invention is illustrated. The fastener 1 comprises a base member 2 having a base portion 6 below a coupling section 9 of the base member 2. The base member 2 serves as a base or support for the roof safety products to be connected to the fastener 1. The base portion 6 is a lower edge or lower surface of the base member 2. When the fastener 1 is mounted on an upper roof surface having a step, the base portion 6 faces towards the upper roof surface. The fastener 1 further comprises a first leg 15 projecting from the base member 2 and having a first length. The first leg 15 comprises a first foot 3. Further, the fastener 1 comprises a second leg 16 projecting from the base member 2 and having a second length which is less than the first length. The second leg 16 comprises a second foot 4. The feet 3, 4 are arranged separated from each other along the base portion 6 of the base member 2. Typically, the feet 3, 4 are arranged at opposing ends of the fastener 1. The feet 3, 4 are arranged at different levels to each other. The feet 3, 4 are further separated by material of the base member 2.

The fastener 1 is configured to provide a gap 5 between the legs 15, 16, the base portion 6 of the base member 2 as well as an upper roof surface (7) as the fastener 1 is mounted on the upper roof surface 7. The fastener 1 is configured to provide varying dimensions of the gap 5 depending on a height h_{S} of a step 8 of the upper roof surface 7 as can be seen in FIGURE 3.

The base member 2, the first leg 15 comprising the first foot 3 and the second leg 16 comprising the second foot 4 are formed of one single piece. Typically, the base member 2, the first leg 15 comprising the first foot 3 and the second leg 16 comprising the second foot 4 are made of metal. An example material may be stainless steel. The base member 2, the first leg 15 comprising the first foot 3 and the second leg 16 comprising the second foot 4 may be completely or partially covered with paint.

The first foot 3 and the second foot 4 are both orientated substantially perpendicular or perpendicular to the base member 2. Each foot 3, 4 is configured to be attached to an upper roof surface 7 having a step. The fastener 1 is capable of being attached to an upper roof surface 7 having steps 8 with different step heights h_{S}.

In FIGURE 3, three different step heights h_{S1} < h_{S2} < h_{S3} are schematically shown. Of course, there is in reality only one step height h_{S} present at a time. It can be seen that the base portion 6 of the base member 2 is parallel or substantially parallel to the upper roof surface 7 when the fastener 1 is attached to a roof having a step height h_{S3}. The base portion 6 of the base member 2 is typically parallel or substantially parallel to a contacting surface 14 of the first foot 3 and/or a contacting surface 14 of the second foot. However, the base portion 6 is not necessarily straight, but could be instead also curved or otherwise shaped. The base portion 6 is shaped such that a gap 5 is present between the base portion 6 and the upper roof surface 7 as the fastener is mounted to the upper roof surface. Consequently, the base portion 6 of the base member 2 is located at a different level than the first foot 3 and at a different level than the second foot 4. The shape of the gap 5 is substantially rectangular or rectangular, for instance. In case of a smaller step height h_{S2}, the shape of the gap 5 changes, i.e. the lower edge 6 or lower surface of the base member and the upper roof surface 7 are orientated at an angle to each other. In case of an even smaller step height h_{S3}, the shape of the gap 5 changes further, i.e. the lower edge 6 or lower surface of the base member 2 nd the upper roof surface 7 are orientated at an even larger angle to each other. The fastener 1 is configured to provide varying dimensions of the gap 5 depending on the height h_{S} of the step 8 of the upper roof surface 7. The shape of the gap 5 may be, for example, depending on the base portion 6 and the height h_{S} of the step 8 either substantially rectangular or substantially trapezoidal.

A height difference between the first foot 3 and the second foot 4 may be, for example, in the range between 10 mm and 50 mm. In other words, the feet 3, 4 are not arranged on the same level. The second foot 4 is arranged above the first foot 3. The contacting surface 14 of the first foot 3 and the contacting surface 14 of the second foot 4 are typically parallel to each other. Thus, the fastener 1 can be arranged on the upper roof surface 7 such that a step 8 is located between the feet 3, 4. The step 8 may be located adjacent to the first foot 3 or between the first foot 3 and the second foot 4, for instance.

The fastener 1 further comprises a coupling section 9. The coupling section 9 comprises typically at least one opening through the base member 2. A rod (not shown) or tubing of a snow guard may be, for example, coupled to the fastener by inserting a part of the rod or tubing through the opening.

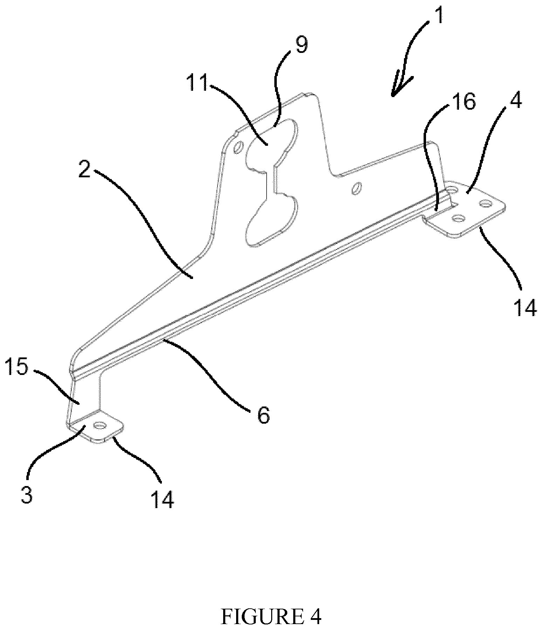

In FIGURE 4 a schematic perspective view of a further 1 fastener in accordance with at least some embodiments of the present invention is illustrated. The fastener 1 comprises a base member 2 from which a first leg 15 including a first foot 3 and a second leg 16 including a second foot 4 project. The base member 2, the first leg 15 comprising the first foot 3 and the second leg 16 comprising the second foot 4 are formed of one single piece. Typically, the base member 2, the first leg 15 comprising the first foot 3 and the second leg 16 comprising the second foot 4 are made of metal. Typically, a planar metal substrate is cut or punched in order to obtain a single piece having a predefined shape. Normally, the single piece is formed from a steel plate having a thickness in the range between 1 mm and 5 mm, for example 2.5 mm. Also any openings or borings are made at the same time within the outer contour of the cut or punched piece of metal. Subsequently, the cut or punched piece of metal is bent into a defined form in order to obtain the fastener 1. The fastener 1 may be further completely or partially covered with paint.

The fastener 1 can then be attached to an upper roof surface having a step. The fastener 1 is designed to be used in connection with upper roof surfaces having different step heights. The feet 3, 4 are separated from each other and arranged at different levels to each other. The first leg 15 comprising the first foot 3 and the second leg 16 comprising the second foot 4 are separated by material of the base member 2. The platelike base member 2 serves as a base or support for the roof safety products to be connected to the fastener 1. Between the first leg 15 comprising the first foot 3, the second leg 16 comprising the second foot 4, a lower edge 6 or lower surface of the base member 2 as well as an upper roof surface (not shown) a gap or space is present as the fastener 1 is mounted on the upper roof surface. Typically, the contacting surface 14 of the second foot 4, which is attached to the upper roof surface above the first foot 3, is greater than the contacting surface 14 of the first foot 3. The shown second foot 4 is L-shaped. In other words, the second foot 4 is designed such that a part of the second foot 4 is arranged on one side of the base member 2 and another part of the second foot 4 is arranged on the other side of the base member 2. The first foot 3 is only bent to one side of the base member 2. The feet 3, 4 may include one boring or more than one boring for attaching the fastener 1 with screws or bolts to the upper roof surface, for instance. The fastener 1 is configured to provide varying dimensions of the gap or space depending on a height of a step of the upper roof surface 7. In other words, the gap has first dimensions in case of a first step height and different second dimensions for a different second step height.

The base member 2 comprises a coupling section 9. The coupling section 9 typically comprises one opening 11 or several openings. The shape of the opening is depending on the roof safety product to be connected to the fastener 1. For example, the shape of the opening 11 may be circular, rectangular or of any other desired shape. In the shown embodiment, two tubes of a snow guard can be connected to the fastener 1, for instance. The opening 11 is formed such that the tubes to be received can have either a circular or an oval cross-section. Further, the opening 11 may comprise an upper section, a middle section and a lower section as shown in FIGURE 4. In such a case, a single unit comprising a first tube, a second tube and a plate connecting the first tube and the second tube may be inserted into the opening 11 of the coupling section 9. The base member 2 may additionally comprise other openings or borings useful for connecting the roof safety product to the fastener 1.

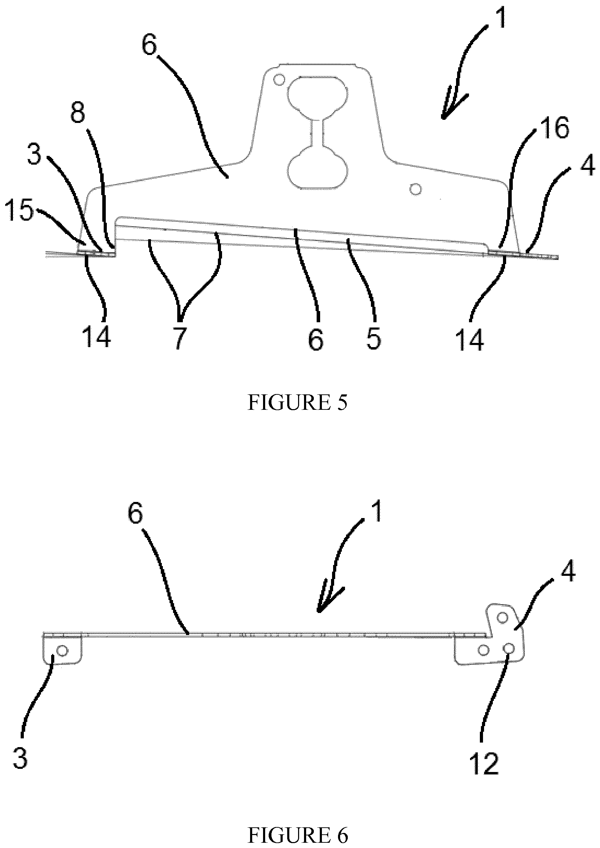

In FIGURE 5 a schematic side view of an even further fastener 1 in accordance with at least some embodiments of the present invention is illustrated. The fastener 1 comprises a base member 2 from metal. Additionally, the fastener 1 comprises a first leg 15 comprising a first foot 3 and a second leg 16 comprising a second foot 4. The first leg 15 and the second leg 16 each project from the base member 2. The feet 3, 4 are separated from each other and arranged at different levels to each other. Each foot 3, 4 comprises a contacting surface 14 configured to be coupled to an upper roof surface 7. The contacting surfaces 14 of the feet 3, 4 may be, for example, arranged parallel to each other. In other cases, the contacting surfaces 14 of the feet 3, 4 are not arranged parallel to each other. A contacting surface 14 of at least one of the feet 3, 4 may be adapted for use with a particular form of the upper roof surface 7.

The fastener 1 is configured to provide a space or gap 5 between the first leg 15 comprising the first foot 3 and the second leg 16 comprising the second foot 4, the base or base portion 6 of the base member 2 and an upper roof surface 7 as the fastener 1 is mounted on the upper roof surface 7. As can be seen from FIGURE 5, the dimensions of the space or gap 5 below the base portion 6 of the base member 2 of the fastener 1 are depending on a height of a step 8 of the upper roof surface 7. Two different heights of a step 8 are shown. In case of the lower height of the step, the space or gap 5 is substantially in the form of a trapezoid. In the other case, the gap 5 is substantially in the form of a rectangular. Of course, the fastener 1 can also be mounted on upper roof surfaces having another height of the step than shown in FIGURE 5 for illustration purposes. However, the base portion 6 is typically not in direct contact with a part of the upper roof surface.

Consequently, the amount of needed fastener versions can be reduced as one fastener 1 can cover many roof shapes. The fastener 1 according to the present invention is easy to manufacture and easy to install. At the same time, a rigid structure is provided and the fastener 1 is less problematic from the sealing point of view. The fastener 1 as such can be formed of one single piece of metal, for instance. The fastener 1 according to the present invention enables installation to various roof types with different step heights. The space or gap 5 further enables moisture to evaporate and dirt to escape from under the fastener 1, because there is space for air to flow through. The fastener 1 is strong enough for installation of roof safety products and at the same time lighter in weight.

In FIGURE 6 a schematic top view of a yet further fastener 1 in accordance with at least some embodiments of the present invention is illustrated. As shown, the footprint of the second foot 4 is greater than the footprint of the first foot 3. The second foot 4 is typically mounted above the first foot 3 to the upper roof surface. The first foot 4 is mounted to the upper roof surface on a first side of the step and the second foot 4 is mounted to the upper roof surface on a second side of the step. The base portion 6 of the base member 2 extends over the step from the first side to the second side between the feet 3, 4. Of course, the feet 3, 4 may have other shapes and sizes than shown in FIGURE 6. The feet 3, 4 further typically include at least one boring 12 for mounting the fastener to the roof using threaded screws, nails, bolts or other attachment means.

It is to be understood that the embodiments of the invention disclosed are not limited to the particular structures, process steps, or materials disclosed herein, but are extended to equivalents thereof as would be recognized by those ordinarily skilled in the relevant arts and within the scope of the invention as defined in the appended claims. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in fastening of roof safety products, for example in mounting of snow guards.

### REFERENCE SIGNS LIST

- 1: fastener
- 2: base member
- 3: first foot
- 4: second foot
- 5: gap
- 6: base portion
- 7: upper roof surface
- 8: step
- 9: coupling section
- 10: planar support
- 11: opening
- 12: boring
- 13: extension
- 14: contacting surface
- 15: first leg
- 16: second leg
- h_{S}: step height

### CITATION LIST

### Patent Literature

US 6453623 B1

## Claims

1. A fastener (1) for roof safety products, the fastener (1) comprising:
- a base member (2),
- a first leg (15) projecting from the base member (2), the first leg (15) comprising a first foot (3), and the first leg (15) having a first length between the base member (2) and the first foot (3), and
- the first foot (3) being orientated perpendicular or substantially perpendicular to the the first leg (15),
- a second leg (16) projecting from the base member (2), the second leg (16) comprising a second foot (4), and the second leg (16) having a second length between the base member (2) and the second foot (3), wherein the second length is less than the first length,
- wherein the first foot (3) and the second foot (4) are orientated perpendicular or substantially perpendicular to the base member (2), the first leg (15) and the second leg (16),
- wherein the fastener (1) comprises a coupling section (9) configured to be coupled to a roof safety product,
- wherein the first foot (3) and the second foot (4) both comprise a boring (12) for mounting the fastener to the roof,
**characterized in that**
- the second leg (16) is projecting from the base member (2) on the same side of the base member surface as the first leg (15), and **in that**
- the feet (3, 4) are arranged at different levels to each other seen in a direction perpendicular to the plane of the feet.

2. The fastener (1) according to claim 1, wherein the base member (2), the first leg (15) comprising first foot (3) and the second leg (16) comprising the second foot (4) are formed of one single piece.

3. The fastener (1) according to claim 1 or 2, wherein the base member (2), the first leg (15) comprising the first foot (3) and the second leg (16) comprising the second foot (4) are made of metal.

4. The fastener (1) according to any one of claims 1-3, wherein each foot (3, 4) is configured to be attached to an upper roof surface having a step.

5. The fastener (1) according to any one of claims 1-4, wherein the legs (15, 16) are arranged at opposing ends of the base member (2).

6. The fastener (1) according to any one of claims 1-5, wherein a length difference between the first length (15) and the second leg (16) is in the range between 10 mm and 50 mm.

7. The fastener (1) according to any of claims 1-6, wherein the coupling section (9) comprises at least one opening through the base member (2) and the fastener (1) is configured to be coupled to a snow guard or roof safety equipment.

8. The fastener (1) according to claim 7, wherein the coupling section (9) is capable of receiving two tubes having a circular or oval cross-section through the at least one opening.

9. The fastener (1) according to any one of claims 1-8, wherein the fastener (1) is made of a steel plate having a thickness in the range between 1 mm and 5 mm.

10. The fastener (1) according to any one of claims 1-9, wherein the base portion (6) is a lower edge or a lower surface of the base member (2) below the coupling section (9) and between the legs (15, 16).

11. The fastener (1) according to any one of claims 1-10, wherein at least one of the feet (3, 4) is substantially L-shaped.

12. The fastener (1) according to any one of claims 1-11, wherein each foot (3, 4) comprises a contacting surface (14) configured to be coupled to an upper roof surface (7), wherein the contacting surfaces (14) of the feet (3, 4) are arranged parallel to each other.

13. The fastener (1) according to claim 12, wherein the surface area of the contact surface of the first foot (3) is less than the surface area of the contact surface of the second foot (4).

14. A method for manufacturing a fastener (1) for roof safety products, the method comprising:
- forming a single piece having a predefined shape from a planar substrate,
- bending the single piece in order to form a first foot (3) of a first leg (15) projecting from a base member (2), wherein the first leg (15) has a first length between the base member (2) and the first foot (3), and
- bending the single piece in order to form a second foot (4) of a second leg (16) projecting from the base member (2), wherein the second leg (16) has a second length between the base member (2) and the second foot (4), wherein the second length is less than the first length, and
- providing a coupling section (9) configured to be coupled to a roof safety product, the method further comprising
- forming the second leg (16) on the same side of the base member surface as the first leg (15),
- bending the first foot (3) and the second foot (4) perpendicular or substantially perpendicular to the base member (2), the first leg (15) and the second leg (16),
- arranging the feet (3, 4) at different levels to each other seen in a direction perpendicular to the plane of the feet,
- providing the coupling section (9) with at least one opening through the base member (2), and
- providing the first foot (3) and the second foot (4) with a boring (12) for mounting the fastener to the roof.

## Patentansprüche

1. Befestigungselement (1) für Dachsicherheitsprodukte, wobei das Befestigungselement (1) Folgendes umfasst:
- ein Basiselement (2),
- einen ersten Schenkel (15), der von dem Basiselement (2) vorsteht, wobei der erste Schenkel (15) einen ersten Fuß (3) umfasst, und wobei der erste Schenkel (15) eine erste Länge zwischen dem Basiselement (2) und dem ersten Fuß (3) umfasst, und
- wobei der erste Fuß (3) senkrecht oder im Wesentlichen senkrecht zu dem Basiselement (2) orientiert ist,
- einen zweiten Schenkel (16), der von dem Basiselement (2) vorsteht, wobei der zweite Schenkel (16) einen zweiten Fuß (4) umfasst, und wobei der zweite Schenkel (16) eine zweite Länge zwischen dem Basiselement (2) und dem zweiten Fuß (3) aufweist,
wobei die zweite Länge kleiner als die erste Länge ist,
- wobei der erste Fuß (3) und der zweite Fuß (4) senkrecht oder im Wesentlichen senkrecht zu dem Basiselement (2), dem ersten Schenkel (15) und dem zweiten Schenkel (16) orientiert sind,
- wobei das Befestigungselement (1) einen Kopplungsabschnitt (9) umfasst, der dazu ausgelegt ist, mit einem Dachsicherheitsprodukt gekoppelt zu werden,
- wobei der erste Fuß (3) und der zweite Fuß (4) beide eine Bohrung (12) zum Montieren des Befestigungselements an dem Dach umfassen,
**dadurch gekennzeichnet, dass**
- der zweite Schenkel (16) von dem Basiselement (2) auf derselben Seite der Basiselementoberfläche (2) wie der erste Schenkel (15) vorsteht,
und dass
- die Füße (3, 4) in unterschiedlichen Ebenen zueinander angeordnet sind, gesehen in einer Richtung senkrecht zu der Ebene der Füße.

2. Befestigungselement (1) nach Anspruch 1, wobei das Basiselement (2), der erste Schenkel (15), der den ersten Fuß (3) umfasst, und der zweite Schenkel (16), der den zweiten Fuß (4) umfasst, aus einem einzigen Stück gebildet sind.

3. Befestigungselement (1) nach Anspruch 1 oder 2, wobei das Basiselement (2), der erste Schenkel (15), der den ersten Fuß (3) umfasst, und der zweite Schenkel (16), der den zweiten Fuß (4) umfasst, aus Metall hergestellt sind.

4. Befestigungselement (1) nach einem der Ansprüche 1-3, wobei jeder Fuß (3, 4), dazu ausgelegt ist, an einer oberen Dachfläche, die eine Stufe aufweist, befestigt zu werden.

5. Befestigungselement (1) nach einem der Ansprüche 1-4, wobei die Schenkel (15, 16) an gegenüberliegenden Enden des Basiselements (2) angeordnet sind.

6. Befestigungselement (1) nach einem der Ansprüche 1-5, wobei ein Längenunterschied zwischen der ersten Länge (15) und dem zweiten Schenkel (16) im Bereich zwischen 10 mm und 50 mm liegt.

7. Befestigungselement (1) nach einem der Ansprüche 1-6, wobei der Kopplungsabschnitt (9) mindestens eine Öffnung durch das Basiselement (2) umfasst und das Befestigungselement (1) konfiguriert ist, um mit einem Schneeschutz oder einer Dachsicherheitsausrüstung gekoppelt zu werden.

8. Befestigungselement (1) nach Anspruch 7, wobei der Kopplungsabschnitt (9) in der Lage ist, zwei Rohre mit einem kreisförmigen oder ovalen Querschnitt durch die mindestens eine Öffnung aufzunehmen.

9. Befestigungselement (1) nach einem der Ansprüche 1-8, wobei das Befestigungselement (1) aus einer Stahlplatte mit einer Dicke im Bereich zwischen 1 mm und 5 mm hergestellt ist.

10. Befestigungselement (1) nach einem der Ansprüche 1-9, wobei der Basisabschnitt (6) eine Unterkante oder eine Unterfläche des Basiselements (2) unter dem Kopplungsabschnitt (9) und zwischen den Schenkeln (15, 16) ist.

11. Befestigungselement (1) nach einem der Ansprüche 1-10, wobei mindestens einer der Füße (3, 4) im Wesentlichen L-förmig ist.

12. Befestigungselement (1) nach einem der Ansprüche 1-11, wobei jeder Fuß (3, 4) eine Kontaktfläche (14) umfasst, die dazu ausgelegt ist, mit einer oberen Dachfläche (7) gekoppelt zu werden, wobei die Kontaktflächen (14) der Füße (3, 4) parallel zueinander angeordnet sind.

13. Befestigungselement (1) nach Anspruch 12, wobei die Fläche der Kontaktfläche des ersten Fußes (3) kleiner als die Fläche der Kontaktfläche des zweiten Fußes (4) ist.

14. Verfahren zum Herstellen eines Befestigungselements (1) für Dachsicherheitsprodukte, wobei das Verfahren Folgendes umfasst:
- Bilden eines einzigen Stücks mit einer vordefinierten Form aus einem ebenen Substrat,
- Biegen des einzigen Stücks, um einen ersten Fuß (3) eines ersten Schenkels (15) zu bilden, der von einem Basiselement vorsteht,
wobei der erste Schenkel (15) eine erste Länge zwischen dem Basiselement (2) und dem ersten Fuß (3) aufweist, und
- Biegen des einzigen Stücks, um einen zweiten Fuß (4) eines zweiten Schenkels (16) zu bilden, der von der Basis vorsteht,
wobei der zweite Schenkel (16) eine zweite Länge zwischen dem Basiselement (2) und dem zweiten Fuß (4) aufweist,
wobei die zweite Länge kleiner als die erste Länge ist, und
- Bereitstellen eines Kopplungsabschnitts (9), der konfiguriert ist, um mit einem Dachsicherheitsprodukt gekoppelt zu werden,
wobei das Verfahren ferner Folgendes umfasst:
- Bilden des zweiten Schenkels (16) auf derselben Seite der Basiselementoberfläche wie der erste Schenkel (15),
- Biegen des ersten Fußes (3) und des zweiten Fußes (4) senkrecht oder im Wesentlichen senkrecht zu dem Basiselement (2), dem ersten Schenkel (15) und dem zweiten Schenkel (16),
- Anordnen der Füße (3, 4) in unterschiedlichen Ebenen zueinander, gesehen in einer Richtung senkrecht zu der Ebene der Füße,
- Versehen des Kopplungsabschnitts (9) mit mindestens einer Öffnung durch das Basiselement (2),
- Versehen des ersten Fußes (3) und des zweiten Fußes (4) mit einer Bohrung (12) zum Montieren des Befestigungselements an dem Dach.

## Revendications

1. Attache (1) pour produits de sécurité de toit, l'attache (1) comprenant :
- un élément de base (2),
- une première patte (15) faisant saillie depuis l'élément de base (2), la première patte (15) comprenant un premier pied (3), et la première patte (15) présentant une première longueur entre l'élément de base (2) et le premier pied (3), et
- le premier pied (3) étant orienté perpendiculairement ou sensiblement perpendiculairement à la première patte (15),
- une seconde patte (16) faisant saillie depuis l'élément de base (2), la seconde patte (16) comprenant un second pied (4), et la seconde patte (16) présentant une seconde longueur entre l'élément de base (2) et le second pied (3), dans laquelle la seconde longueur est inférieure à la première longueur,
- dans laquelle le premier pied (3) et le second pied (4) sont orientés perpendiculairement ou sensiblement perpendiculairement à l'élément de base (2), à la première patte (15) et à la seconde patte (16),
- dans laquelle l'attache (1) comprend une section de couplage (9) configurée pour être couplée à un produit de sécurité de toit,
- dans laquelle le premier pied (3) et le second pied (4) comprennent tous les deux un alésage (12) pour le montage de l'attache au toit, **caractérisée en ce que**
- la seconde patte (16) fait saillie depuis l'élément de base (2) sur le même côté de la surface d'élément de base que la première patte (15), et **en ce que**
- les pieds (3, 4) sont agencés à des niveaux différents l'un de l'autre, vus dans une direction perpendiculaire au plan des pieds.

2. Attache (1) selon la revendication 1, dans laquelle l'élément de base (2), la première patte (15) comprenant le premier pied (3) et la seconde patte (16) comprenant le second pied (4) sont formés d'un seul tenant.

3. Attache (1) selon la revendication 1 ou la revendication 2, dans laquelle l'élément de base (2), la première patte (15) comprenant le premier pied (3) et la seconde patte (16) comprenant le second pied (4) sont composés de métal.

4. Attache (1) selon l'une quelconque des revendications 1 à 3, dans laquelle chaque pied (3, 4) est configuré pour être attaché à une surface de toit supérieure présentant un palier.

5. Attache (1) selon l'une quelconque des revendications 1 à 4, dans laquelle les pattes (15, 16) sont agencées au niveau d'extrémités opposées de l'élément de base (2).

6. Attache (1) selon l'une quelconque des revendications 1 à 5, dans laquelle une différence de longueur entre la première longueur (15) et la seconde longueur (16) est dans la plage entre 10 mm et 50 mm.

7. Attache (1) selon l'une quelconque des revendications 1 à 6, dans laquelle la section de couplage (9) comprend au moins une ouverture à travers l'élément de base (2) et l'attache (1) est configurée pour être couplée à un pare-neige ou équipement de sécurité de toit.

8. Attache (1) selon la revendication 7, dans laquelle la section de couplage (9) est apte à recevoir deux tubes présentant une section transversale circulaire ou ovale à travers la au moins une ouverture.

9. Attache (1) selon l'une quelconque des revendications 1 à 8, dans laquelle l'attache (1) est composée d'une plaque d'acier présentant une épaisseur dans la plage entre 1 mm et 5 mm.

10. Attache (1) selon l'une quelconque des revendications 1 à 9, dans laquelle la portion base (6) est un bord inférieur ou une surface inférieure de l'élément de base (2) sous la section de couplage (9) et entre les pattes (15, 16).

11. Attache (1) selon l'une quelconque des revendications 1 à 10, dans laquelle au moins un des pieds (3, 4) est sensiblement en forme de L.

12. Attache (1) selon l'une quelconque des revendications 1 à 11, dans laquelle chaque pied (3, 4) comprend une surface d'entrée en contact (14) configurée pour être couplée à une surface de toit supérieure (7), dans laquelle les surfaces d'entrée en contact (14) des pieds (3, 4) sont agencées parallèlement l'une à l'autre.

13. Attache (1) selon la revendication 12, dans laquelle la superficie de la surface de contact du premier pied (3) est inférieure à la superficie de la surface de contact du second pied (4).

14. Procédé de fabrication d'une attache (1) pour produits de sécurité de toit, le procédé comprenant :
- la formation d'une pièce unique présentant une forme prédéfinie à partir d'un substrat planaire,
- le cintrage de la pièce unique afin de former un premier pied (3) d'une première patte (15) faisant saillie depuis un élément de base (2), dans lequel la première patte (15) présente une première longueur entre l'élément de base (2) et le premier pied (3), et
- le cintrage de la pièce unique afin de former un second pied (4) d'une seconde patte (16) faisant saillie depuis un élément de base (2), dans lequel la seconde patte (16) présente une seconde longueur entre l'élément de base (2) et le second pied (4), dans lequel la seconde longueur est inférieure à la première longueur, et
- la fourniture d'une section de couplage (9) configurée pour être couplée à un produit de sécurité de toit, le procédé comprenant en outre
- la formation de la seconde patte (16) sur le même côté de la surface d'élément de base que la première patte (15),
- le cintrage du premier pied (3) et du second pied (4) perpendiculairement ou sensiblement perpendiculairement à l'élément de base (2), à la première patte (15) et à la seconde patte (16),
- l'agencement des pieds (3, 4) à des niveaux différents l'un de l'autre, vus dans une direction perpendiculaire au plan des pieds,
- la fourniture de la section de couplage (9) avec au moins une ouverture à travers l'élément de base (2), et
- le fait de doter le premier pied (3) et le second pied (4) d'un alésage (12) pour le montage de l'attache au toit.
